# EUROPEAN PATENT APPLICATION

(11) **EP 4 119 525 A1**
(43) Date of publication of application: **18.01.2023**
(21) Application number: 21185095.3
(22) Date of filing: 12.07.2021
(51) Int. Cl.: C04B 38/10

(54) **LIQUID FOAM WITH GAS PORES**

(71) Applicant: Sika Technology AG, 6340 Baar (CH); ETH Zürich, 8092 Zürich (CH)
(72) Inventor: Oblak, Luka, 8064 Zürich (CH); Hansson, Martin, 46231 Vanersborg (SE); Vermant, Jan, 8092 Zürich (CH)
(74) Representative: Sika Patent Attorneys

(57) **Abstract**

A method for producing a liquid foam with gas pores, comprises the steps of:
a) Providing a suspension at a first pressure, whereby the suspension comprises suspended nanoparticles in a liquid;
b) Contacting the suspension with a gas phase;
c) Subjecting the suspension to an underpressure, whereby the underpressure is a pressure lower than the first pressure;
d) Foaming the suspension for producing gas bubbles in the suspension while the suspension is kept at the underpressure, such that gas pores comprising a gas volume surrounded by nanoparticles at the gas-liquid interface are produced;
e) Releasing the underpressure in order to obtain the liquid foam with suspended gas pores.

## Description

### Technical field

The invention relates to a method for producing a liquid foam with gas pores as well as a liquid foam obtainable by the method. A further aspect of the invention is directed to a mineral binder composition comprising a liquid foam and the use of a foam as an admixture for a mineral binder composition, especially as an air entrainer, in particular for increasing the freeze-thaw resistance of a mineral binder composition.

### Background art

In construction industry, compositions based on mineral binders, such as e.g. mortar or concrete compositions, are widely used for various applications. Mineral binder compositions, frequently have to be aerated, for example, in order to improve processability, to control the density, to improve insulating properties, or to achieve a sufficient resistance to freeze-thaw cycles and de-icing salts.

Usually, this is achieved by incorporating an air void-forming agent in the mineral binder composition during mixing. Thereby, for example, the process of mixing the mineral binder composition leads to the formation of air voids, which are stabilized by the addition of the air void-forming agent. Other air-void forming agents actively produce air voids in the form of gas bubbles due to a chemical reaction when they come into contact with the water during the mixing operation. Also, it is known to use hollow particles, e.g. hollow polymeric particles, as air-void forming agents, which can be added during mixing. In all of these approaches, air voids are entrapped during hardening and remain in the hardened mineral binder composition.

Mineral binder compositions that in hardened state are resistant to freeze-thaw cycles in particular should have sufficient air voids with a size of approximately 10 - 250 µm, whereby a critical distance between neighboring air voids is around 200 µm. Otherwise, the mineral binder composition has insufficient expansion ability and space for ice crystals that form during cooling to temperatures below 0° C, a situation that can lead to spalling and even destruction of the hardended mineral binder composition.

However, the size and distribution of pores produced by known air void-forming agent typically depend strongly on the mixing duration and the mixing type. Often pores produced with known air void-forming agents are poorly controlled, unevenly distributed and partly unnecessarily big, i.e. 200 µm or more in diameter. This affects mechanical properties of the hardened mineral binder composition at a given freeze-thaw resistance or reduces the given freeze-thaw resistance, respectively.

Other issues with known air void-forming agents include foaming over time, defoaming over time, and particularly within the first minutes after mixing, a modification of the air void structure over time. Also, there can be problems related to different sensitivities or poor compatibilities with respect to other concrete additives and binder materials.

Likewise, particle-based air void-forming materials in the form of hollow silica spheres can get crushed during their introduction to concrete at least to a certain extent and hollow polymeric particles usually are difficult to be pumped and dosed, or the adhesion of the polymeric material to the mineral binder is limited.

Thus, there is still a need to provide improved solutions.

### Disclosure of the invention

It is an object of the present invention to provide improved solutions for entraining gas or air into other materials, especially into hydraulic binder compositions. Thereby, preferably, the solutions should allow for producing pores in a hydraulic binder composition with a distribution and a size as uniform as possible. In addition, preferably, the solutions make it possible to produce a defined proportion of pores with a predetermined size independently of the mixing duration and the mixing type. In particular, the solution should allow for improving the freeze-thaw stability of hardened mineral binder compositions and to impair the mechanical properties of the hardened mineral binder composition as little as possible.

Surprisingly, it has been found that the features of claim 1 achieve this object. Thus, the core of the present invention is related to a method for producing a liquid foam with gas pores, comprising the steps of:
a) Providing a suspension at a first pressure, whereby the suspension comprises suspended nanoparticles in a liquid;
b) Contacting the suspension with a gas phase;
c) Subjecting the suspension to an underpressure, whereby the underpressure is a pressure lower than the first pressure;
d) Foaming the suspension for producing gas bubbles in the suspension while the suspension is kept at the underpressure, such that gas pores comprising a gas volume surrounded by nanoparticles at the gas-liquid interface are produced;
e) Releasing the underpressure in order to obtain the liquid foam with suspended gas pores.

As it turned out, the inventive method allows for producing a liquid foam with relatively small but highly stable gas pores of quite uniform size in a very reliable manner. Remarkably, the foam is stable up to at least 6 months. The long lasting stability seems to be due to the fact that in step e) of the inventive process, the gas pores surrounded by nanoparticles at the gas-liquid interface produced in step d) shrink in size due to the pressure increase. Thereby, the nanoparticles on individual gas pores are compacted and/or compressed against each other, resulting in the formation of a denser and/or essentially closed shell of nanoparticles. Nevertheless, the nanoparticle shell, even if made of relatively hard inorganic materials, seems to be compressible to a certain extent what - in contrast to hard hollow particles known from prior art - allows for absorbing mechanical forces to a certain extent without breaking.

The so produced inventive foam can be used as an admixture for a mineral binder composition for entraining gas in the form of gas pores. Thereby, the foam turned out to be highly stable against mechanical forces occurring during mixing processes as well as with regard to undesired reactions with other components of typical mineral binder compositions, such e.g. plasticizers or mineral binders.

Applications of the liquid foam outside the field of mineral binder compositions are possible as well. In principle, the inventive foam can be customized by choosing appropriate nanoparticles and liquids for use in essentially any kind of materials or environment. For example, the liquid foam can be used for producing foamed plastic materials or foamed composite materials. Also, the liquid foam can be used as a material as such.

Especially, a rather small size of the gas pores of for example 1 - 50 µm can easily be realized. This is especially interesting if the foam for example is used for increasing the freeze-thaw stability in mineral binder compositions. Smaller gas pores can better be distributed in the mineral binder composition, resulting in a smaller spacing factor (= maximum distance between a given point in the mineral binder composition from the periphery of the closest gas pore). Also, the specific surface area of the gas pores (= surface area of a given quantity of gas in a standardized volume) can be increased with smaller gas pores. Overall, this allows for reducing the proportion of gas required to obtain a given freeze-thaw resistance or to increase the mechanical properties of the hardened mineral binder composition at a given gas content. The latter is due to the fact, that the mechanical properties of hardened mineral binder compositions typically are negatively affected with increasing gas content.

Thanks to the fact that the gas pores are suspended, they can easily be pumped what makes mixing and dosing easy.

Additional aspects of the invention are subject of further independent claims. Particularly preferred embodiments are outlined throughout the description and the dependent claims.

### Ways of carrying out the invention

A first aspect of the present invention is directed to a method for producing a liquid foam with gas pores, comprising the steps of:
a) Providing a suspension in contact with a gas phase at a first pressure, whereby the suspension comprises suspended nanoparticles in a liquid;
b) Contacting the suspension with a gas phase;
c) Subjecting the suspension to an underpressure, whereby the underpressure is a pressure lower than the first pressure;
d) Foaming the suspension for producing gas bubbles in the suspension while the suspension is kept at the underpressure, such that gas pores comprising a gas volume surrounded by nanoparticles at the gas-liquid interface are produced;
e) Releasing the underpressure in order to obtain the liquid foam with suspended gas pores.

Thereby, step b) can be performed before step c) and/or steps b) and c) can be performed simultaneously. Put differently, the suspension can be contacted with the gas phase before it is subjected to the underpressure and/or the suspension can be contacted with the gas phase while the suspension is kept under underpressure.

Especially, step b) is performed before step c). In this case, the suspension is present in contact with the gas phase at the first pressure when it is subjected to the underpressure in step c).

According to another implementation, steps b) and c) are performed simultaneously. In this case, the suspension is brought in contact with the gas phase while the suspension is kept at the underpressure. Thereby, the gas phase can for example be introduced into a gas-tight sealable container in which the method is performed.

However, if desired, it is possible as well to contact the suspension with the gas phase before subjecting it to underpressure and additionally while the suspension is kept at underpressure.

However, independently of the specific implementation, the suspension is in contact with the gas phase during step d).

In particular, the nanoparticles are selected and/or modified such that they arrange on the liquid-gas interface of the gas bubbles in step d). This can be achieved by adjusting the amphiphilicity of the nanoparticles. Especially, "amphiphilic" means that the nanoparticle is hydrophobic and hydrophilic enough to adsorb on the liquid-gas interface.

Thus, the nanoparticles, at least at their surface, preferably are amphiphilic, or they are made amphiphilic, e.g. with a surfactant and/or by adjusting a pH of the liquid. For example, if the liquid is a polar liquid, such as e.g. water, the nanoparticles preferably are sufficiently hydrophobic or, if the liquid is an apolar liquid, such as e.g. a hydrocarbon, the nanoparticles preferably is sufficiently lipophobic. The desired amphiphilicity of a nanoparticle in a three-phase system (solid, liquid, gas) preferably provides a contact angle between 110 - 15°, particularly 110 - 30°, especially 105 - 45°, in particular 95 - 50°, for example 90 - 70°.

The nanoparticles preferably have a size of 10 nm - 1 µm, especially 20 - 500 nm, in particular 25 - 300 nm, for example 30 - 150 nm.

In particular, the nanoparticles are chosen from inorganic nanoparticles, especially from clay, talc, silica, calcium carbonate, ferite, gibbsite, titanium oxide, zinc oxide, aluminium oxide, magnesium oxide, cement, gypsum and/or carbon black nanoparticles. Especially, the nanoparticles are silica nanoparticles.

According to another preferred implementation, the nanoparticles are chosen from organic nanoparticles, especially polymer nanoparticles, in particular polystyrene nanoparticles and/or poly(methyl methacrylate) nanoparticles.

A proportion of the nanoparticles in particular is from 1 - 50 vol.%, in particular 2 - 20 vol.%, especially 3 - 10 vol.%, with respect to the total volume of the suspension.

Preferably, in step a) a surfactant is added to the suspension. This allows for adjusting the amphiphilicity, especially the hydrophobicity, of the nanoparticles in a quite flexible manner. However, addition of a surfactant is optional. If for example, nanoparticles are chosen which are amphiphilic by nature or because of a previous treatment, a surfactant does not necessarily have to be added to the suspension.

In particular, a type and proportion of the surfactant are chosen such that the nanoparticles are made amphiphilic or liquid-repellent by the surfactant. Especially, a type and proportion of the surfactant are chosen such that the nanoparticles are hydrophobized.

In particular, in step a) the surfactant, if added, preferably is at least partly adsorbed on the nanoparticles. Thus, in this case, the surfactant and/or the nanoparticles are chosen such that the surfactant is adsorbed on the nanoparticles in the liquid.

In particular, the surfactant is a substance having a first end that is capable of adsorbing and/or binding to the nanoparticles and a second end that is liquid-repellent. In particular, if the liquid is a polar liquid, such as e.g. water, the second end of the surfactant preferably is hydrophobic or, if the liquid is an apolar liquid, such as e.g. a hydrocarbon, the second end of the surfactant preferably is lipophobic.

Preferably, the surfactant is chosen from ionic surfactants, especially cationic surfactants, anionic surfactants and/or zwitterionic surfactants. However, in another implementation, the surfactant can be chosen from nonionic surfactants.

Especially, the surfactant is chosen from quaternary ammonium compounds, organosulfates, fatty acids, polysorbate-type surfactants (formed by the ethoxylation of sorbitan before the addition of lauric acid) and/or sorbitan esters, especially from sodium dodecyl sulfate (SDS), tetradecyltrimethylammonium bromide (TTAB), Cetyltrimethylammonium bromide (CTAB), Dodecyltrimethylammonium bromide (DTAB), oleic acid, polyoxyethylen(20)-sorbitan-monolaurat and/or sorbitan monooleate. However, other surfactants might be suitable as well.

In particular, a proportion of the surfactant is from 0.001 - 100 mmol/liter, especially 0.01 - 10 mmol/liter, in particular 0.1 - 2 mmol/liter, with respect to the total volume of the suspension.

Preferably, the first pressure is atmospheric pressure or a pressure in the range of 0.8 - 1.2 bar. This makes it possible to perform step a) under ambient conditions.

In particular, the underpressure is at least 10 mbar, especially at least 250 mbar, in particular at least 500 mbar, lower than the first pressure. For example, the underpressure is 10 - 1'000 mbar, especially 250 - 900 mbar, in particular 500 - 950 mbar, lower than the first pressure. With an underpressure in these ranges, highly stable gas pores can be produced, most likely because the gas pore surfaces are effectively compacted with nanoparticles and/or nanoparticles are compressed against each other in step e).

According to a preferred implementation, the underpressure is from 25 - 990 mbar, especially 50 - 900 mbar, in particular 100 - 500 mbar. In this case, preferably, the first pressure is atmospheric pressure. Thereby, the liquid is for example water.

Most preferably, in step e) the underpressure is released until the first pressure, especially atmospheric pressure, is reached again.

In particular, the method is performed with the suspension at a temperature below the boiling point of the liquid at the conditions present in steps c) and d).

The method preferably is performed with the suspension at room temperature or at a temperature of 1 - 90°C, in particular 5 - 50°C, especially 10 - 30°C or 15 - 25°C, whereby, in particular, the liquid comprises or consists of water. However, other temperatures might be suitable as well, especially in combination with liquids other than water. In this case, temperatures below 0°C or above 90°C can be suitable as well.

Preferably, the gas phase comprises or consist of air, CO₂, N₂, O₂, and/or a noble gas. A preferred noble gas is argon. Most preferably, the gas phase comprises or consist of air. This allows for a rather easy process with step a) conducted under ambient conditions without need to supply additional gas.

The liquid preferably comprises or consists of a non-polar aprotic solvent, a polar aprotic solvent and/or a polar protic solvent, especially selected from alkanes, benzene, ethers, alcohols, and/or water.

Most preferably, the liquid comprises or consists of water.

According to a further preferred implementation, a pH modifier is additionally added to the suspension, especially in step a). In particular, the pH modifier is an acid and/or a base, for example selected from HCI, NaOH, KOH and/or CaOH. A pH modifier allows for adjusting the charging state of the nanoparticles in the liquid. This in turn enables the surfactant, if added, to better adsorb onto the nanoparticles.

Especially a pH of the suspension is in the range of 2 - 13, especially 7 - 12, in particular 8 - 11. A pH of 7 or more turned out to be highly beneficial, especially if inorganic nanoparticles, in particular silica nanoparticles, are used.

In particular, a type and proportion of the pH modifier and/or the pH are chosen such that the nanoparticles are charged so that an ionic surfactant is adsorbed on the nanoparticles.

Especially, if a surfactant is added, the pH modifier preferably is added to the nanoparticles in the liquid before adding the surfactant.

Preferably, in the liquid foam, pores with a size of 1 - 200 µm, especially 5 - 100 µm, in particular 10 - 50 µm, are produced.

Preferably, in step e) the gas pores are compacted and/or a size of the gas pores is reduced, especially by at least 10%, in particular by at least 25%, with respect to the size of the gas pores in step d). The size of a gas pore is meant to be the longest extension of an individual gas pore including the nanoparticles surrounding the gas volume. The size can e.g. be determined with microscopy.

Especially, in step e) the nanoparticles are compacted and/or compressed against each other. "Compacted" means that the distance between neighboring nanoparticles at the gas-liquid interface is reduced, especially such that neighboring nanoparticles at the gas-liquid interface are in physical contact. In this case a dense shell of the nanoparticles around the gas volume is formed.

Thus, preferably, the method is performed such that in the liquid foam, the nanoparticles form a shell around the gas volume whereby in the shell neighboring nanoparticles are in direct contact.

Especially, the method is performed such that a gas volume entrapped in the pores in the liquid foam is from 5 - 95 vol.%, especially 50 - 70 vol.%, with respect to the total volume of the liquid foam.

In particular, the method is performed such that the liquid foam is stable for at least 1 month, especially at least 3 months, in particular at least 6 months.

Foaming in step d) preferably is effected by mechanically stirring and/or agitating the suspension, especially with a mixer, for example with a magnetic stirrer and/or an ultrasonic mixer.

Preferably, the method is performed in a gas-tight sealable container. The underpressure is for example generated with a vacuum pump and/or a movable plunger in the gas-tight sealable container which allows for changing the volume of the container.

According to a highly preferred embodiment, the inventive method is performed with:
- A polar protic solvent, especially water, as the liquid;
- a gas phase comprising or consisting of air;
- 1 - 50 vol.% inorganic nanoparticles, especially having a size of 10 nm - 1 µm;
- 0.001 - 100 mmol/liter of a surfactant, especially an ionic surfactant;
- a pH of the suspension of 7 - 12;
- atmospheric pressure as the first pressure and an underpressure of 50 - 900 mbar; and/or
- at a temperature of 5 - 50°C

Preferably, all of these conditions mentioned are met in combination.

According to another highly preferred embodiment, the inventive method is performed with:
- water as the liquid;
- a gas phase comprising or consisting of air;
- 2 - 20 vol.% silica nanoparticles, especially having a size of 10 - 70 nm;
- 0.01 - 10 mmol/liter of an ionic surfactant, especially chosen from quaternary ammonium compounds;
- a pH of the suspension of 8 - 11;
- atmospheric pressure as the first pressure and an underpressure of 100 - 500 mbar; and/or
- at room temperature.

Preferably, all of these conditions mentioned are met in combination.

A further aspect if the present invention is a liquid foam with gas pores obtainable or obtained with the process as described above.

In the liquid foam, preferably, the nanoparticles form a shell around the gas volume of the gas pores. In the shell, neighboring nanoparticles in particular are in direct contact.

Especially, the individual gas pores with the nanoparticle shell have an irregular and/or non-spherical shape. Especially, an average sphericity of the individual gas pores is < 1, in particular < 0.98, especially < 0.96. The sphericity is defined as the surface area of a sphere of the same volume as a given gas pores divided by the actual surface area of the gas pore.

A size of the gas pores in the liquid foam preferably is from 1 - 200 µm, especially 5 - 100 µm, in particular 10 - 50 µm. Such sizes makes the gas pores suitable for many different technical applications, especially for use as air entraining additives for mineral binder compositions.

Preferably, the total volume entrapped in the gas pores in the liquid foam is from 30 - 95 vol.%, especially 50 - 70 vol.%, with respect to the overall volume of the liquid foam.

The liquid foam is in particular stable for at least 1 month, especially at least 3 months, in particular at least 6 months. Thus, the liquid foam can be stored and transported after production without significantly changing its properties.

A further aspect of the present invention is concerned with a mineral binder composition, especially a mortar or concrete composition, comprising a liquid foam obtainable with the inventive method or as described above.

The expression "mineral binder composition" means in particular compositions comprising a mineral binder and optionally further components. A "mineral binder" is meant to be a substance which in the presence of water reacts in a hydration reaction to give solid hydrates or hydrate phases. This can by way of example be a hydraulic binder (e.g. cement or hydraulic lime), a latently hydraulic binder (e.g. slag), a pozzolanic binder (e.g. fly ash), or a non-hydraulic binder (e.g. gypsum or white lime).

The mineral binder or the mineral binder composition in particular comprises a hydraulic binder, preferably cement. Particular preference is given to Portland cement, in particular of the type CEM I, II, III, or IV (in accordance with the standard EN 197-1). The entire mineral binder advantageously comprises a proportion of at least 5% by weight of the hydraulic binder, in particular at least 20% by weight, preferably at least 50% by weight, specifically at least 75% by weight. In another advantageous embodiment the mineral binder comprises at least 95% by weight of hydraulic binder, in particular cement.

However, it can also be advantageous that the binder composition comprises, in addition or instead of a hydraulic binder, other binders. These are in particular latent hydraulic binders and/or pozzolanic binders. Examples of suitable latent hydraulic binders and/or pozzolanic binders are slag, fly ash, and/or silica dust. In an advantageous embodiment the mineral binder comprises from 5 to 95% by weight, in particular from 20 to 50% by weight, of latent hydraulic binders and/or pozzolanic binders.

Additionally, the mineral binder composition preferably contains solid aggregates, for example, gravel, sand and or fillers. Fillers preferably are inert substances, for example powdered limestone, powdered quartz, and/or pigments. Corresponding compositions can be used, for example, as mortar mixtures or concrete mixtures.

For example, the mineral binder composition in addition contains water, wherein a weight ratio of water to mineral binder can be in the range of 0.25-0.8, for example, 0.3-0.6, for example, 0.35-0.5. Such binder compositions can be processed directly as mortar mixtures or concrete mixtures.

Especially, the liquid foam is used or present with a proportion of 0.001 - 20 vol.%, especially 0.01 - 10 vol.%, in particular 0.1 - 5 vol.%, with respect to the total volume of the mineral binder composition.

Another aspect of the invention is directed to a method for producing a mineral binder composition comprising the steps of (i) producing a liquid foam with gas pores as described above and (ii) mixing the liquid foam with a mineral binder composition as described above.

A further aspect of the present invention is a hardened mineral binder composition obtainable by hardening a mineral binder composition as described above after addition of water.

Another aspect of the present invention is the use of a liquid foam as described above as an admixture for a mineral binder composition, especially as an air entrainer, in particular for increasing a freeze-thaw resistance of a mineral binder composition in hardened state.

Thereby, preferably, the liquid foam is used with a proportion of 0.001 - 20 vol.%, especially 0.01 - 10 vol.%, in particular 0.1 - 5 vol.%, with respect to the total volume of the freshly prepared mineral binder composition.

Further advantageous configurations of the invention are evident from the exemplary embodiments.

### Brief description of the drawings

The drawings used to explain the embodiments show:
- Fig. 1: a microscopy image of an inventive foam with gas pores in the range of 10 - 50 µm;
- Fig. 2: a microscopy image of a reference foam having much larger pores und pores with a more uneven pore size distribution than the foam of Fig. 1.

### Exemplary embodiments

### 1. Preparation of liquid foams

In a first step, an aqueous suspension was prepared as follows: 10 wt.-% (= 5 vol.%) nanosilica with a primary particle size of 20 nm and 1 mM (mmol/liter) of tetradecyltrimethylammonium bromide (TTAB) was added to liquid water with a pH of 10 (adjusted with NaOH) in an air atmosphere under ambient conditions (room temperature of 22°C; atmospheric pressure of around 1'013 mbar). This suspension is referred to as **SUS.**

The suspension was then transferred into a gas-tight sealable glass tube, having a moveable plunger for adjusting the inner volume of the glass tube and a magnetically driven stirring element. Thereby the inner volume of the glass tube was partly filled with the suspension and partly with air. Then, by moving the plunger, the inner volume was increased, whereby the pressure in the glass tube was reduced to an underpressure of 250 mbar. Subsequently, the suspension was foamed by stirring whereby gas bubbles had formed in the suspension.

After the stirring was stopped, the underpressure in the glass tube was released and a liquid foam with suspended gas pores was obtained. The foam turned out to be stable for more than 6 months. This foam according to the invention is referred to as **LF.**

For comparison, the procedure was repeated in the same manner. However, instead of reducing the pressure to the underpressure 250 mbar, the pressure in the glass tube was kept constant at atmospheric pressure during the whole process. The reference foam obtained with this procedure is referred to as **LF-R. LF-R** is not stable and undergoes coalescence and coarsening.

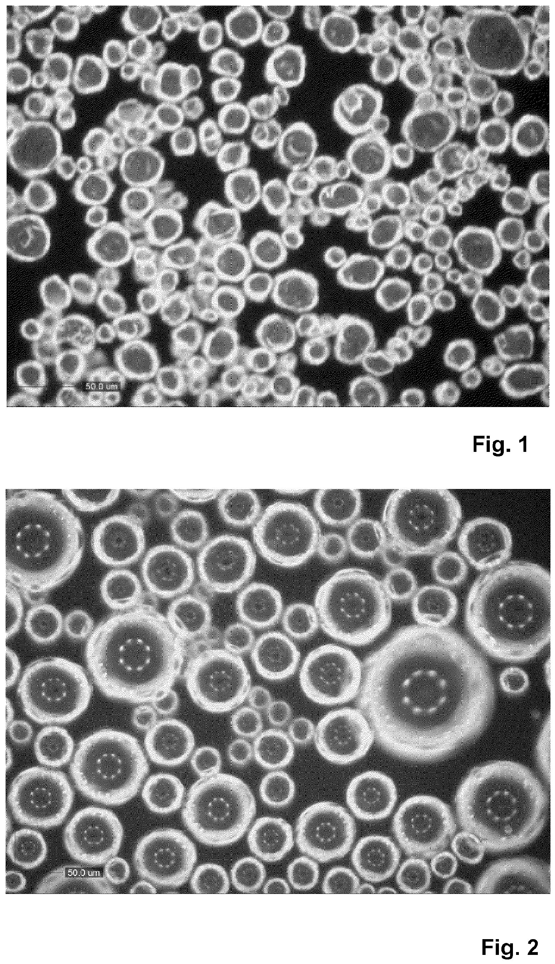

As evident from Fig. 1, which shows a microscopy image of the inventive foam **LF** (magnification ≈ 900 x), the foam **LF** consists of irregularly shaped gas pores comprising an inner volume (grey area) surrounded by a nanoparticle shell (bright rings around grey area). A size of the gas pores is about 10 - 50 µm.

In Fig. 2, the microscopy image of reference foam **LF-R** (magnification ≈ 600 x) shows that there are much larger and round shaped pores with sizes up to more than 150 µm besides rather small gas pores. Thus, there is a much less uniform distribution of the gas pores in reference foam **LF-R.**

### 2. Use as admixture for mineral binder compositions

Table 1 shows the compositions of six concrete composition **T1** - **T6** used in the working examples and their properties. The concrete compositions were prepared by mixing the solid components for 1 minute with a Hobart mixer. Within 30 seconds, the mixing water, in which the additives were dissolved or dispersed, was added and mixing continued for another 2.5 minutes. The total wet mixing time took 3 minutes each.

**Table 1: Concrete composition and their properties**

| **Component** | **T1** | **T2** | **T3** | **T4** | **T5** | **T6** |
|---|---|---|---|---|---|---|
| Portland cement [kg] | 0.7 | | | | | |

| Aggregates [kg] | | | | | | |
|---|---|---|---|---|---|---|
| - Filler (calcium carbonate) | 0.14 | | | | | |
| - Sand (grain size 0.1 - 1 mm) | 0.75 | | | | | |
| - Sand (grain size 1 - 4 mm) | 1.12 | | | | | |
| - Gravel (grain size 4 - 8 mm) | 1.17 | | | | | |
| Water [w/c] | 0.46 | | | | | |

| Additives [wt.%] | | | | | | |
|---|---|---|---|---|---|---|
| - Plasticizer¹⁾ | 0.4 | 0.4 | 0.4 | 0.4 | 0.4 | 0.4 |
| **- SUS** | **-** | 2.3 | 2.3 | 2.3 | - | - |
| - Sika^{®} Fro V-5 A²⁾ | - - | - | 0.3 | - | - | - |
| - SikaControl^{®} AER-200 P³⁾ | - | - | - | 0.2 | - | - |
| **- LF** | - | - | - | - | 0.9 | 1.8 |

| Properties | | | | | | |
|---|---|---|---|---|---|---|
| - Flow table spread⁴⁾ [mm] | 180 | 180 | 180 | 175 | 180 | 180 |
| - Air content⁵⁾ [%] | 3 | 4.5 | 5 | 5.5 | 4.5 | 5.5 |
| - Density fresh⁶⁾ [kg/liter] | 2373 | 2324 | 2314 | 2332 | 2322 | 2305 |
| - Density hard⁷⁾ [kg/liter] | 2330 | 2340 | 2300 | 2150 | 2330 | 2260 |
| - Surface spalling⁸⁾ [g/m²] | 908 | 205 | 187 | 138 | 196 | 104 |

| | | | | | | |
|---|---|---|---|---|---|---|
| ¹⁾ Sika Viscocrete 4027, polycarboxylate ether, Sika Switzerland AG, Switzerland ²⁾ Air entrainer comprising surface active substances; available from Sika Switzerland AG, Switzerland ³⁾ Air entrainer comprising reactive metal compounds and calcium carbonate; available from Sika Switzerland AG, Switzerland ⁴⁾ Measured according to standard EN 12350-5:2009 (5 minutes after preparation) ⁵⁾ Determined according to standard EN 1015-7:1998 ⁶⁾ Density of concrete composition after preparation (5 minutes after preparation) ⁷⁾ Dry density of hardened concrete composition ⁸⁾ After 28 freeze-thaw cycles in salt; Measured according to standard SIA 262/1:2013 C.9 | | | | | | |

As evident from table 1, addition of the suspension **SUS** (composition **T2)** remarkably reduces the surface spalling when compared to the composition comprising solely the plasticizer (composition **T1).** This is most likely due to the fact, that the suspension even without mixing comprises a significant proportion of air voids, which increases the air content in the composition. Thus, with the suspension **SUS,** the freeze-thaw resistance can be increased significantly (the lower the surface spalling, the better the freeze-thaw resistance).

When adding an additional air entraining agent (compositions **T3** and **T4),** the air content is further increased and surface spalling is further reduced or freeze-thaw resistance is improved, respectively. However, in this case, the density of the compositions in hardened state is remarkably lower, especially for composition **T4.** This is indicative of a reduced mechanical strength.

Interestingly, when comparing composition **T2** with **T5,** one recognizes that it is possible to replace the suspension **SUS** with a lower weight proportion with the stable inventive foam **LF** while achieving a similar surface spalling and density in hardened state. Thus, although the inventive foam **LF** is highly stable, it comprises gas pores which are suitable for accommodating water in freeze-thaw cycles.

Furthermore, the comparison of composition **T4** with **T6** shows that with an identical air content of 5.5%, when using the inventive foam **LF** (composition **T6**) the surface spalling is lower than with the composition comprising a non-inventive air entrainer (composition **T4).** However, the density in hardened state is significantly higher with the composition comprising the inventive foam **LF.** This is indicative for a better and more homogeneous inclusion of smaller air pores in the hardened composition **T6.**

Also, the inventive foam **LF** does not negatively affect the flow table spread of the mineral binder compositions.

Finally, it should be noted that with the commercial air entrainers, the air content in the concrete composition depends quite strongly on the specific mixing conditions. This is not the case with the inventive foam, which allows for obtaining a dosage dependent air content that is essentially independent of the mixing conditions.

In summary, the use of the inventive foam allows for significantly increasing the freeze-thaw stability of for example concrete compositions whereby mechanical properties are affected only slightly. Furthermore, the inventive foam is very stable and easy to handle. Thus, many of the drawbacks of known air entrainers can be circumvented.

It will be appreciated by those skilled in the art that the present invention can be embodied in other specific forms without departing from the spirit or essential characteristics thereof. The presently disclosed embodiments are therefore considered in all respects to be illustrative and not restrictive.

## Claims

1. Method for producing a liquid foam with gas pores, comprising the steps of:
a) Providing a suspension in contact with a gas phase at a first pressure, whereby the suspension comprises suspended nanoparticles in a liquid;
b) Contacting the suspension with a gas phase;
c) Subjecting the suspension to an underpressure, whereby the underpressure is a pressure lower than the first pressure;
d) Foaming the suspension for producing gas bubbles in the suspension while the suspension is kept at the underpressure, such that gas pores comprising a gas volume surrounded by nanoparticles at the gas-liquid interface are produced;
e) Releasing the underpressure in order to obtain the liquid foam with suspended gas pores.

2. Method according to claim 1, whereby the nanoparticles are selected and/or modified such that they arrange on the liquid-gas interface of the gas bubbles in step d).

3. Method according to any of preceding claims, whereby in step e) the gas pores surface are surrounded with nanoparticles and/or a size of the gas pores is reduced, especially by at least 10%, in particular by at least 25%.

4. Method according to any of preceding claims, whereby the nanoparticles are chosen from inorganic nanoparticles, especially from clay, talc, silica, calcium carbonate, ferite, gibbsite, titanium oxide, zinc oxide, aluminium oxide, magnesium oxide, cement, gypsum and/or carbon black nanoparticles.

5. Method according to any of preceding claims, whereby a proportion of the nanoparticles is from 1 - 50 vol.%, in particular 2 - 20 vol.%, especially 3 - 10 vol.%, with respect to the total volume of the suspension.

6. Method according to any of preceding claims, whereby in step a) a surfactant is added, whereby a type and proportion of the surfactant are chosen such that the nanoparticles are made amphiphilic by the surfactant.

7. Method according to any of preceding claims, whereby a proportion of the surfactant is from 0.001 - 100 mmol/liter, especially 0.01 - 10 mmol/liter, in particular 0.1 - 2 mmol/liter, with respect to the total volume of the suspension.

8. Method according to any of preceding claims, whereby the first pressure is atmospheric pressure or a pressure in the range of 0.8 - 1.2 bar and the underpressure is at least 10 mbar, especially at least 250 mbar, in particular at least 500 mbar, lower than the first pressure.

9. Method according to any of preceding claims, whereby the liquid comprises or consists of water.

10. Method according to any of preceding claims, whereby a pH of the suspension is in the range of 2 - 13, especially 7 - 12, in particular 8 - 11.

11. Liquid foam with gas pores obtainable with the process according to any of the preceding claims.

12. Liquid foam according to claim 11, whereby a nanoparticle shell is arranged around individual gas pores, and whereby pores with a size of 1 - 200 µm, especially 5 - 100 µm, in particular 10 - 50 µm, are present.

13. Mineral binder composition, especially a mortar or concrete composition, comprising a liquid foam according to claim 12.

14. Mineral binder according to claim 13, whereby the liquid foam is present with a proportion of 0.001 - 20 vol.%, especially 0.01 - 10 vol.%, in particular 0.1 - 5 vol.%, with respect to the total volume of the mineral binder composition.

15. Use of a liquid foam according to any of claims 11 - 12 as an admixture for a mineral binder composition, especially as an air entrainer, in particular for increasing a freeze-thaw resistance of a mineral binder composition in hardened state.
